(19) Europäisches Patentamt
European Patent Office
Office européen des brevets

(11) **EP 2 601 333 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**28.06.2017 Patentblatt 2017/26**

(45) Hinweis auf die Patenterteilung:
**26.03.2014 Patentblatt 2014/13**

(21) Anmeldenummer: 11739078.1

(22) Anmeldetag: **04.08.2011**

(51) Int Cl.:
*D01F 2/00* *(2006.01)*    *D01F 2/06* *(2006.01)*
*D01F 2/02* *(2006.01)*    *D02G 3/48* *(2006.01)*
*B60C 9/00* *(2006.01)*    *B60C 9/04* *(2006.01)*

(86) Internationale Anmeldenummer:
**PCT/EP2011/063442**

(87) Internationale Veröffentlichungsnummer:
**WO 2012/017034 (09.02.2012 Gazette 2012/06)**

(54) **VERWENDUNG EINES KORDES AUS CELLULOSISCHEN MULTIFILAMENTGARNEN MIT ERHÖHTEM EINZELFILAMENTTITER**

USE OF A CORD MADE OF CELLULOSIC MULTIFILAMENT YARNS HAVING AN INCREASED LINEAR DENSITY OF INDIVIDUAL FILAMENTS

UTILISATION D'UN CÂBLE CONSTITUÉ DE FILS MULTIFILAMENTS CELLULOSIQUES PRÉSENTANT UN TITRE DE FILAMENT INDIVIDUEL ÉLEVÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2010 EP 10171957**
**05.08.2010 EP 10171956**

(43) Veröffentlichungstag der Anmeldung:
**12.06.2013 Patentblatt 2013/24**

(73) Patentinhaber: **Cordenka GmbH & Co. KG**
**63784 Obernburg (DE)**

(72) Erfinder:
• **ZIMMERER, Britta**
**63916 Amorbach (DE)**
• **UIHLEIN, Kurt**
**63920 Großheubach (DE)**
• **SCHEYTT, Holger**
**63906 Erlenbach (DE)**
• **SCHWIERSCH, Gerold**
**63096 Erlenbach (DE)**
• **MÖSSINGER, Dennis**
**64295 Darmstadt (DE)**

(74) Vertreter: **Oberlein, Gerriet H. R.**
**CPW GmbH**
**Kasinostraße 19-21**
**42103 Wuppertal (DE)**

(56) Entgegenhaltungen:
EP-A2- 1 433 881    WO-A1-96/06208
GB-A- 1 069 500     US-A- 3 116 354
US-A- 3 337 671     US-B1- 6 261 689

**EP 2 601 333 B2**

**Beschreibung**

Die vorliegende Erfindung bezieht sich auf die Verwendung eines cellulosischen Multifilamentgarns mit erhöhtem Einzelfilamenttiters zur Verbesserung (Erhöhung) des Ermüdungsverhaltens eines Kordes. Korde aus cellulosischen Filamentgarnen sind bekannt und werden üblicherweise als Festigkeitsträger für technische Erzeugnisse eingesetzt, z.B. zur Verstärkung von elastomeren Bauteilen und Produkten, wie beispielsweise als Reifenkorde, Schlaucharmierung, oder als Festigkeitsträger in Riemen und Förderbändern.

Weltweit ist Cellulose das häufigste und bedeutendste natürlich vorkommende Polymer. Cellulosische Fasern, Filamente und Multifilamente können auf vielfältigen Wegen und in unterschiedlichen Formen erhalten werden, die gleichfalls der Fachwelt bekannt und geläufig sind. Die Einteilung kann nach dem Herstellungsverfahren - beispielsweise Direktlöseverfahren oder Regeneratverfahren - vorgenommen werden und/oder nach der Art des erhaltenen Produktes, das entweder wiederum aus Cellulose mit modifizierter Kristallstruktur (sog. Hydratcellulose) besteht - beispielsweise Viskose - oder aber ein polymeranaloges Derivat der Cellulose darstellt, wie z.B. die bekannten Celluloseacetate oder Cellulosetriacetate.

Als Direktlöseverfahren sind u.a. Prozesse bekannt, bei denen die Gewinnung cellulosischer Fasern aus Lösungen in tertiären Aminoxiden, wie N-Methylmorpholin-N-oxid (NMMO), ionischen Flüssigkeiten (ionic liquids) oder auch Phosphorsäure und anschließendem Ausfällen in geeignete Koagulationsmedien erfolgt.

Weitere gängige Verfahren zur Herstellung von cellulosischen Filamenten, die zur Garn- bzw. Kordherstellung verwendet werden, sind Regeneratverfahren, bei denen Cellulose zunächst chemisch zu löslichen Derivaten (Xanthogenate oder Carbamate) umgesetzt und gelöst wird. Die Lösung wird durch Spinndüsen gepumpt und schließlich im Fällbad zu cellulosischen Filamenten regeneriert. Solche Filamente sind u.a. unter der Bezeichnung Rayon bekannt. Die Prozesse zu ihrer Herstellung sind gleichfalls bekannt.

Als Karkassengewebe in Autoreifen eingesetzt, sind so erhaltene Korde großen dynamischen Belastungen sowie hohen Temperaturen ausgesetzt. Um diesen Anforderungen gerecht zu werden, benötigen die Korde bzw. die sie bildenden Multifilamentgarne hohe Festigkeiten sowie eine ausgezeichnete Temperaturbeständigkeit und einen hohen Ermüdungswiderstand (Fatigue-Resistenz).

So beschreibt beispielsweise die WO 2008/143375 cellulosische Korde auf Basis von Lyocell, die einen guten Ermüdungswiderstand aufweisen und aus Garnen mit einer Filamentzahl zwischen 200 und 2000 sowie einem Titer (= lineare Dichte) von 200 bis 3000 Denier bestehen. Die Filamente weisen nicht-runde, vorzugsweise beinahe dreieckige, Querschnittsflächen auf.

Der Artikel "A Study of the Compression Fatigue and the Damping Phenomena of Tire Cord" (J. Appl. Pol. Sci. VI, No. 22, p. 373-379) beschreibt, dass sogenannte "Viskose-Super- Korde" mit Einzelfilamenttitern von ca. 1,7 dtex eine besonders gute Fatiguebeständigkeit aufweisen.

Aufgabe der vorliegenden Erfindung ist somit die weitere Verbesserung des Ermüdungswiderstandes von cellulosischen Korden, im Wesentlichen unabhängig von der Gestalt des Filamentquerschnitts der sie bildenden Multifilamentgarne und die sich dadurch besonders gut für den Einsatz als Verstärkungskorde für Fahrzeugreifen eignen. Diese Aufgabe wird erfindungsgemäß durch die Verwendung eines cellulosisches Multifilamentgarn gelöst, das sich dadurch auszeichnet, dass das cellulosische Multifilamentgarn eine Festigkeit von mindestens 35 cN/tex und die einzelnen Filamente des Multifilamentgarns einen Titer von mindestens 2,3 dtex aufweisen, wobei der so erhaltene Kord mit einem Zwirnfaktor $T_f$ = 185 im Disc Fatigue Test bei Komprimierungs-/Dehnungseinstellungen von -20/+2 % und einer Anzahl von 855.000 Zyklen (6 Stunden) - durchgeführt und ausgewertet nach ASTM D 6588-einen mindestens um einen Faktor 1,1 höheren Ermüdungswiderstand aufweist als ein Kord des gleichen Aufbaus mit einem Einzelfilamenttiter von $\leq 2,0$ dtex. Der Ermüdungswiderstand wird gemessen als prozentuale Restfestigkeit (PRS). Überraschenderweise bewirkt diese - verhältnismäßig geringe - Erhöhung des Einzelfilamenttiters schon eine Verbesserung des Ermüdungswiderstandes und es kommt gar nicht mehr - wie im Stand der Technik dargelegt - auf eine Änderung des Filamentquerschnitts an der verwendeten cellulosischen Multifilamentgarne an. Da für die Einzelfilamenttiter von cellulosischen Multifilamentgarnen für technische Anwendungen üblicherweise im Bereich von 1 bis 2 dtex liegen, war dieser Effekt besonders unerwartet.

Insbesondere können die Einzelfilamente des für den Kord verwendeten Multifilamentgarns eine Querschnittsfläche aufweisen, deren Abweichung, ausgedrückt als Modifikationsverhältnis MR (modification ratio), kleiner ist als 1,1. Das Modifikationsverhältnis ist beispielsweise in der WO 2008/143375 beschreiben und bezeichnet den Quotienten zweier Radien des Filamentquerschnitts, $(R_1/R_2)$, wobei der Radius $R_2$ den größtmöglichen Kreis beschreibt, der innerhalb des Filamentquerschnitts liegt, und der Radius $R_1$ der Radius des kleinstmöglichen Kreises ist, der um den Filamentquerschnitt gelegt werden kann. Im Falle eines ideal kreisrunden Querschnitts fallen $R_1$ und $R_2$ zusammen, so dass das Modifikationsverhältnis MR = 1 beträgt.

Das verwendete Multifilamentgarn (im Rahmen dieser Anmeldung auch nur Garn genannt) in den Korden hat eine Festigkeit -von bevorzugt größer als 35 cN/tex (konditioniert nach BISFA), noch bevorzugter von größer als 40 cN/tex, noch mehr bevorzugt größer als 45 cN/tex und am meisten bevorzugt größer als 50 cN/tex. Im Allgemeinen liegt für cellulosische Multifilamentgarne die Grenze der Festigkeit bei etwa 90 cN/tex.

Das Multifilamentgarn hat einen Einzelfilamenttiter von größer als 2,3 dtex, bevorzugt größer als 2,7 dtex, noch bevorzugter von größer als 3,2 dtex, am meisten bevorzugt von größer als 4,0 dtex bis maximal etwa 8 dtex. Es kann aus einer beliebigen Anzahl endloser (kontinuierlicher) Filamente bestehen, wie sie in technischen Produkten üblich sind. In der Regel hat das Garn einen Gesamttiter im Bereich von 30 bis 20000 dtex und besteht aus 10 bis 5000 Filamenten. Die Bruchdehnung des Garnes beträgt 5 bis 20 %, vorzugsweise 7 bis 16 %. Maßgeblich ist der sogenannte "nominale Einzelfilamenttiter", d.h. der Gesamttiter des ungezwirnten Garns geteilt durch die Anzahl der Einzelfilamente. Die Bestimmung des "nominalen Einzelfilamenttiters" erfolgt im ungezwirnten Zustand, da beim Zwirnen generell eine Längenkontraktion auftritt. Grundlage für die Bestimmung des Gesamttiters des ungezwirnten Garns ist die BISFA-Norm ("Testing methods for viscose, cupro, acetate, triacetate and lyocell filament yarns", 2007 edition)

Bevorzugt enthält das verwendete Garn mindestens 80 Gew.-% Cellulose, bevorzugt mindestens 90 Gew.-% und noch bevorzugter mindestens 95 Gew.-% Cellulose.

Das Garn kann im ungezwirnten Zustand oder mit einem Schutzdrall versehen zu einer Garnspule aufgewickelt werden. Die resultierenden Garnspulen sind besonders als Ausgangsmaterial für die Herstellung von Korden zur Nutzung als Verstärkungskomponente für natürliche und synthetische Elastomere, Thermoplaste und Duromere geeignet.

Die Verarbeitung zu den Verstärkungskorden erfolgt üblicherweise durch Verzwirnen eines oder mehrerer Multifilamentgarne, wobei mindestens eines der Garne ganz oder teilweise aus Filamenten mit einem Einzelfilamenttiter gemäß den oben angeführten Grenzen besteht. Bei einer Ausgestaltung der Erfindung wird der Kord durch Verzwirnen von Multifilamentgarnen hergestellt, die alle vollständig aus Filamenten mit einem Einzelfilamenttiter gemäß den oben angeführten Grenzen besteht.

Das Garn kann mit anderen Garnen kombiniert werden, zum Beispiel mit Garnen aus Polyamid, Aramid, Polyester, regenerierter Cellulose, Glas, Stahl und Kohlenstoff. Im gezwirnten oder ungezwirnten Zustand kann das Garn zum Beispiel zusammen mit Viskosefilamentgarn, Nylon 6 und/oder Nylon 66 zu einem Kord verarbeitet werden. Die Garne, mit denen das verwendete cellulosische Garn kombiniert wird, können vorgetaucht sein oder auch nicht.

Das Garn kann an sich, oder als Faserkurzschnitt oder nach Verarbeitung zu einem Kord oder nach anschließender Verarbeitung zu einem Gewebe oder Gewirke als Verstärkungsmaterial für synthetische und natürliche Elastomere, oder für andere Materialien (synthetisch oder auf Basis nachwachsender Rohstoffe), zum Beispiel für thermoplastische und thermofixierende Kunststoffe, dienen.

Zu Beispielen dieser Materialien gehören Naturkautschuk, andere Poly(isopren)e, Poly(butadien)e, Polyisobutylene, Butylkautschuk, Poly(butadien-co-styrol)e, Poly(butadien-coacrylnitril)e, Poly(ethylen-co-propylen)e, Poly(isobutylen-co-isopren)e, Poly(chloropren)e, Polyacrylate, Polyurethane, Polysulfide, Silikone, Polyvinylchlorid, Poly(etherester) vernetzte ungesättigte Polyester, Epoxidharze, oder Mischungen davon.

Erläuterungen zum Ermüdungsverhalten und zur Testmethode

Zum Vergleich von Korden mit unterschiedlichem Gesamttiter sollte für die Beurteilung des Ermüdungsverhaltens der gleiche Zwirnfaktor ($T_f$ = twist factor; Titer-normierte Korddrehung) gewählt werden. Die Definition des Zwirnfaktors $T_f$ lautet:

$$T_f = \frac{n}{100} \cdot \sqrt{\frac{LD_{cord}\,[dtex]}{\rho\,[g\;cm^{-3}]}}$$

(n: Korddrehung in tpm (turns per meter); LD: Gesamttiter in dtex; $\rho$: Dichte des Materials, für Rayon 1,51 g/cm³)

Bei den Ermüdungsprüfungen ist generell zu berücksichtigen, dass ein höherer Zwirn einen besseren Ermüdungswiderstand und damit niedrigere Festigkeitsverluste zur Folge hat. Allerdings führt ein höherer Zwirn zu einem anderen Verlauf der Kraft-Dehnungs-Kurve des Kords und zu geringeren Kordfestigkeiten. Es wird daher für technische Anwendungen immer ein Kompromiss zwischen minimaler Korddrehung und maximalem Ermüdungswiderstand gesucht. Die minimale Korddrehung wird so gewählt, dass sich der Kord noch auf einem sogenannten Stabilitätsplateau befindet, auf dem er noch ein unkritisches Ermüdungsverhalten zeigt. Ein Kord mit verbessertem Ermüdungsverhalten bei identischer Korddrehung ist für technische Anwendungen von entscheidendem Vorteil, weil damit höhere Festigkeiten oder geringerer Materialeinsatz im Bauteil realisiert werden können.

Das Fatigue- bzw. Ermüdungsverhalten der Korde wird mit Hilfe der prozentualen Restreißkraft (PRS = percental retained strength) bewertet, indem die verbliebene Festigkeit eines Prüfkörpers (Kord in Gummiblock einvulkanisiert) nach einem Ermüdungsprogramm in Relation zum unbelasteten Prüfkörper ("virgin sample", Referenzprüfkörper) gesetzt wird:

*PRS [%] = (verbliebene Festigkeit / Festigkeit Referenzprüfkörper) * 100.*

Das Ermüdungsprogramm, auch als Disc-Fatigue-Belastung bzw. GBF (Goodrich Block Fatigue) bezeichnet, wird gemäß ASTM D6588 und ASTM D885-62T ausgeführt. Demzufolge wird die prozentuale Restfestigkeit als GBF-PRS bezeichnet.

Um differenzierte Aussagen über das Ermüdungsverhalten von Korden zu erhalten, werden die Prüfkörper derart dynamisch belastet, dass Sie nach dem Belastungsprogramm nur noch GBF-PRS-Werte von 40-90 % aufweisen, also abseits des oben erwähnten Stabilitätsplateaus liegen (empfohlen in ASTM D885T-62T). Bei cellulosischen Korden mit einem Zwirnfaktor kleiner 200 werden typischerweise nach Belastung mit +2 % Dehnung/-20 % Stauchung für 6 Stunden bei 2375 U/min GBF-PRS-Werte von 40-70 % erreicht. In diesem Belastungsprogramm markiert ein Zwirnfaktor von 200 in der Regel die untere Kante des Stabilitätsplateaus. Unterhalb dieser Grenze tritt eine starke Aufspaltung der Restfestigkeiten verschiedener Kordproben auf, die somit differenziert und nach Ihrer Fatigue-Resistenz klassifiziert werden können.

Herstellungsprozess:

Zur Herstellung der Multifilamentgarne mit höherem Einzelfilamenttiter bei gleichzeitig hoher Festigkeit wird die Anzahl der Düsenlöcher reduziert und der Düsenlochdurchmesser so angepasst, dass trotz höherem Massedurchfluss die Ausspritzgeschwindigkeit vergleichbar zum Herstellungsverfahren mit dem Einzelfilamenttiter 2,0 dtex bleibt, bei identischem Gesamtmassedurchfluss. Da der Fällprozess diffusionsbestimmt ist, ist der Einzelfilamenttiter für wirtschaftliche Produktionsprozesse nach oben hin auf 8 dtex begrenzt.

Ein Reifenkord der Konstruktion 1840 dtex x1 x2 Z/S 375 besteht aus zwei verzwirnten einfachen Multifilamentgarnen mit einem jeweiligen Gesamttiter von 1840 dtex. Die beiden Multifilamentgarne weisen jeweils 375 Drehungen (Z-Drall) pro Meter auf, die Korddrehung erfolgt mit S 375 pro Meter.

Die Erfindung wird mittels der nachfolgenden Beispiele näher erläutert. Dort sind jeweils nominale Gesamt- und Einzelfilamenttiter angegeben.

**Figuren**

Es zeigen:

**Fig. 1:** Einfluss des Einzelfilamenttiters auf das Ermüdungsverhalten eines Kordes des Aufbaus 1840 dtex x1 x2 Z/S 375 im Disc Fatigue Test +2%/-20% Dehnung/Kompression nach 6 Stunden (= 855 000 Zyklen)

**Fig. 2:** Einfluss der Filamentzahl auf das Ermüdungsverhalten am Beispiel 1660 dtex (f720) x1 x2 mit 2,31 dtex gegen 1840 dtex (f1000) x1 x2 mit 1,84 dtex Einzelfilamenttiter.

**Fig. 3:** Vergleich von 1220 dtex x1 x2 - Korden mit Variation der nominalen Einzelfilamenttiter von 1,69 dtex (f720) bis 2,71 dtex (f450).

**Fig. 4:** Verhalten von Lyocell-Korden der Konstruktionen 1840 dtex x1 x2, Z/S 360 und 420 mit verschiedenen Einzelfilamenttitern.

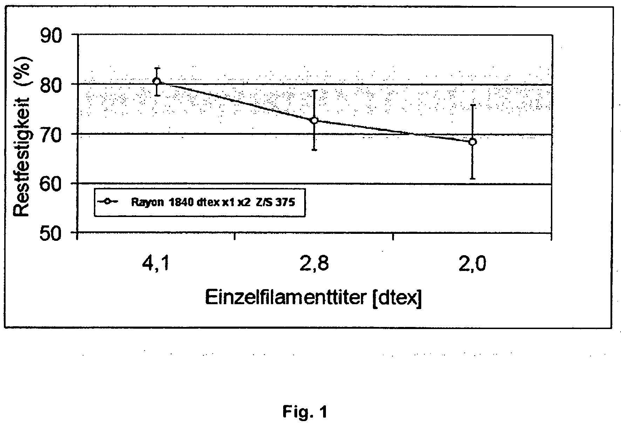

Fig. 1 zeigt summarisch die Abhängigkeit der Restfestigkeit einer Rayon-Standardtype 1840 dtex x1 x2 Z/S 375 nach Ermüdung über 855000 Zyklen (6 Stunden) mit 2% Dehnung und -20 % Stauchung. Auch unter Berücksichtigung der Schwankungsbreite kann der Vorteil der durch die erfindungsgemäße Verwendung erhaltenen Korde hinsichtlich der Verringerung der Ermüdung erkannt werden.

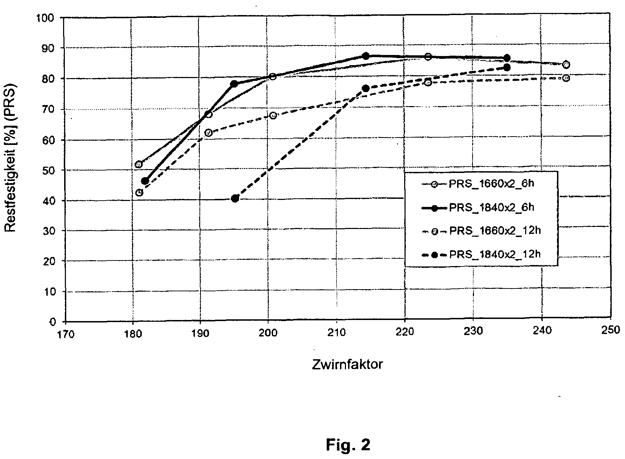

Fig. 2 zeigt den Vergleich der Kordtypen 1840 dtex (f1000) x1 x2 vs. 1660 dtex (f720) x1 x2 mit ihren jeweiligen nominalen Einzelfilamenttitern: 1,84 dtex vs. 2,31 dtex. Der dargestellten Titer-normierten Auftragung (PRS vs. Zwirnfaktor) ist zu entnehmen, dass die beiden Typen nach 6 Stunden (855 000 Zyklen) Disc-Fatigue-Belastung (+2 % Dehnung / -20 % Kompression) noch vergleichbar sind, nach 12 Stunden jedoch der 1660 dtex x1 x2-Kord mit seinen 2,31 dtex-Einzelfilamenten überlegen ist.

Normalerweise ergeben höhere Gesamttiter ein besseres Ermüdungsverhalten. Der höhere Gesamttiter des 1840 dtex x 1 x2-Kords kann im Fall des 1660 dtex x1 x2-Kords (Fig. 2) durch einen höheren Einzelfilamenttiter ausgeglichen werden, so dass damit eine vergleichbare bis bessere Ermüdungsresistenz erzielt werden kann. Der positive Einfluss des dickeren Einzelfilaments verstärkt sich mit zunehmender Dauer des Ermüdungstests.

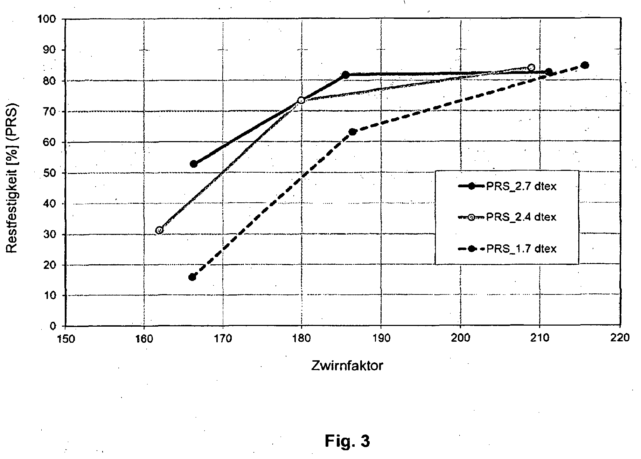

Fig. 3 stellt anhand von Rayon 1220 dtex x1 x2-Korden das Ermüdungsverhalten in Abhängigkeit von den nominalen Einzelfilamenttitern im Bereich von 1,69 dtex (f720) bis 2,71 dtex (f450) dar. Das beste Fatigue-Verhalten zeigt der Kord der unter Verwendung eines cellulosischen Multifilamentgarnes mit einem nominalen Einzelfilamenttiter von 2,71 dtex (f450) erhalten worden ist.

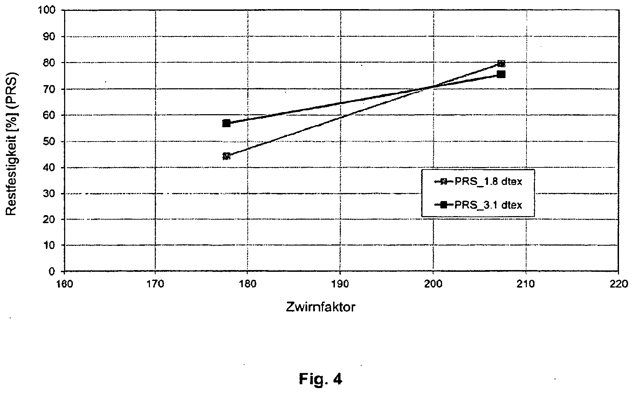

Fig. 4 zeigt am Beispiel von 1840 dtex x1 x2-Korden, dass auch im Direktlöseverfahren (NMMO) hergestellte Multifilamentfasern eine erhöhte Ermüdungsresistenz des dicken Einzelfilaments (3,1 dtex) zeigen. Maßgeblich ist auch hier der kritische Ermüdungsbereich abseits des Stabilitätsniveaus ($T_f$ < 200).

## Patentansprüche

1. Verwendung eines cellulosischen Multifilamentgarnes zur Erhöhung des Ermüdungswiderstandes eines Kordes, sodass eine Kordkonstruktion mit einem Zwirnfaktor $T_f$ = 185 im Disc Fatigue Test bei Komprimierungs-/Dehnungseinstellungen von -20/+2 % und einer Anzahl von 855.000 Zyklen - durchgeführt und ausgewertet nach ASTM D 6588 - einen mindestens um einen Faktor 1,1 höheren Ermüdungswiderstand aufweist als bei gleichem Zwirnfaktor und einem Einzelfilamenttiter von ≤ 2,0 dtex, **dadurch gekennzeichnet, dass** das verwendete cellulosische Multifilamentgarn eine Festigkeit von mindestens 35 cN/tex und die einzelnen Filamente des Multifilamentgarns einen Titer von mindestens 2,3 dtex aufweisen.

2. Die Verwendung nach Anspruch 1, **dadurch gekennzeichnet, dass** die einzelnen Filamente des cellulosischen Multifilamentgarn einen Titer von mindestens 2,7 dtex, bevorzugt mindestens 3,2 dtex, noch bevorzugter von mindestens 4,0 dtex aufweisen.

3. Die Verwendung nach Anspruch 1 oder 2, **dadurch gekennzeichnet, dass** das cellulosische Multifilamentgarn eine Festigkeit von mindestens 40 cN/tex, bevorzugt mindestens 45 cN/tex, noch bevorzugter mindestens 50 cN/tex aufweist.

4. Die Verwendung nach einem oder mehreren der vorhergehenden Ansprüche, **dadurch gekennzeichnet, dass** die cellulosischen Multifilamentgarne nach einem Regeneratverfahren erhalten worden sind.

5. Die Verwendung nach Anspruch 4, **dadurch gekennzeichnet, dass** es sich bei den cellulosischen Multifilamentgarnen um Rayon handelt.

6. Die Verwendung nach einem oder mehreren der Ansprüche 1 bis 3, **dadurch gekennzeichnet, dass** die cellulosischen Multifilamentgarne durch ein Direktlöseverfahren erhalten worden sind.

7. Die Verwendung nach Anspruch 6, **dadurch gekennzeichnet, dass** die cellulosischen Multifilamentgarne durch ein Direktlöseverfahren in tertiärem Aminoxid, insbesondere in N-Methylmorpholin-N-oxid (NMMO), oder in sogenannten "ionic liquids" ionischen Flüssigkeiten erhalten worden sind.

## Claims

1. Use of a cellulosic multifilament yarn to increase the fatigue resistance of a cord so that a cord construction with a twist factor of $T_f$ = 185 in the disc fatigue test with compression/elongation settings of -20/+2 % and 855,000 cycles - performed and evaluated in accordance with ASTM D 6588 - exhibits a higher fatigue resistance by a factor of at least 1.1 than with the same twist factor and an individual-filament linear density of ≤ 2.0 dtex, **characterised in that** the cellulosic multifilament yarn used has a strength of at least 35 cN/tex and the individual filaments of the multifilament yarn have a linear density of at least 2.3 dtex.

2. The use according to Claim 1, **characterised in that** the individual filaments of the cellulosic multifilament yarn have a linear density of at least 2.7 dtex, preferably at least 3.2 dtex, more preferably at least 4.0 dtex.

3. The use according to Claim 1 or 2, **characterised in that** the cellulosic multifilament yarn has a strength of at least 40 cN/tex, preferably at least 45 cN/tex, more preferably at least 50 cN/tex.

4. The use according to one or more of the preceding claims, **characterised in that** the cellulosic multifilament yarns were obtained by a regeneration process.

**5.** The use according to Claim 4, **characterised in that** the cellulosic multifilament yarns are rayon yarns.

**6.** The use according to one or more of Claims 1 to 3, **characterised in that** the cellulosic multifilament yarns were obtained by a direct solvent process.

**7.** The use according to Claim 6, **characterised in that** the cellulosic multifilament yarns were obtained by a direct solvent process in tertiary amine oxide, in particular in *N*-methylmorpholine *N*-oxide (NMMO), or in ionic liquids.

**Revendications**

**1.** Utilisation d'un fil cellulosique du type multifilament en vue d'augmenter la résistance à la fatigue d'un câble, de telle manière que la structure du câble dotée d'un facteur de torsion $T_f = 185$ à l'essai du Dise Fatigue Test effectué et évalué selon la norme ASTM D 6588 avec des réglages de compression/allongement de - 20/+ 2 % et un nombre de cycles de 855 000, présente une résistance à la fatigue supérieure, multipliée au minimum par un facteur 1,1, à celle obtenue avec le même facteur de torsion et avec un titre de filament individuel $\leq 2,0$ dtex, **caractérisée en ce que** le fil cellulosique du type multifilament utilisé présente une résistance d'au moins 35 cN/tex et **en ce que** les filaments individuels du fil du type multifilament présente un titre d'au moins 2,3 dtex.

**2.** Utilisation selon la revendication 1 **caractérisée en ce que** les filaments individuels du fil cellulosique du type multifilament présentent un titre d'au moins 2,7 dtex, de préférence d'au moins 3,2 dtex, encore plus préférablement d'au moins 4,0 dtex.

**3.** Utilisation selon la revendication 1 ou 2 **caractérisée en ce que** le fil cellulosique du type multifilament présente une résistance d'au moins 40 cN/tex, de préférence d'au moins 45 cN/tex, encore plus préférablement d'au moins 50 cN/tex.

**4.** Utilisation selon une ou plusieurs des revendications qui précèdent **caractérisée en ce que** les fils cellulosiques du type multifilament ont été obtenus au moyen d'un procédé de régénération.

**5.** Utilisation selon la revendication 4 **caractérisée en ce qu'**il s'agit de rayonne en ce qui concerne le fil cellulosique du type multifilament.

**6.** Utilisation selon une ou plusieurs des revendications 1 à 3 **caractérisée en ce que** les fils cellulosiques du type multifilament ont été obtenus au moyen d'un procédé de solution directe.

**7.** Utilisation selon la revendication 6 **caractérisée en ce que** les fils cellulosiques du type multifilament ont été obtenus au moyen d'un procédé de solution directe dans un oxyde d'amine tertiaire, en particulier dans l'oxyde N-Méthylmorpholine (NMMO), ou dans des liquides ioniques dits « ionic liquids ».

**Fig. 1**

**Fig. 2**

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008143375 A

**In der Beschreibung aufgeführte Nicht-Patentliteratur**

- A Study of the Compression Fatigue and the Damping Phenomena of Tire Cord. *J. Appl. Pol. Sci. VI,* 373-379

- Testing methods for viscose, cupro, acetate, triacetate and lyocell filament yarns. 2007